# EUROPEAN PATENT APPLICATION

(11) **EP 4 844 937 A1**
(43) Date of publication of application: **25.11.2026**
(21) Application number: 25857290.8
(22) Date of filing: 12.08.2025
(51) Int. Cl.: H01M 50/567, H01M 50/15, H01M 50/60, H01M 50/553, H01M 50/586, H01M 50/186, H01M 10/0587, H01M 10/0525, H01M 50/188

(54) **SECONDARY BATTERY**

(30) Priority: 19.08.2024 KR 20240110751; 11.09.2024 KR 20240123755; 02.04.2025 KR 20250043060; 02.04.2025 KR 20250043061; 11.08.2025 KR 20250110932; 11.08.2025 KR 20250110951
(71) Applicant: LG Energy Solution, Ltd., Seoul 07335 (KR)
(72) Inventor: LEE, Hyun Hee, Daejeon 34122 (KR)
(74) Representative: Goddar, Heinz J.
(86) International application number: PCT/KR2025/012235
(87) International publication number: WO 2026/043201

(57) **Abstract**

The present disclosure relates to a secondary battery including a cap assembly. The cap assembly of the secondary battery according to the present disclosure includes a cap plate, an electrode terminal, a base insulator, and a fixing element. The fixing element penetrates the cap plate and the electrode terminal to form the cap assembly. A current collector is inserted into the fixing element and is joined to the fixing element. The cap assembly of the secondary battery according to the present disclosure may prevent leakage of electrolyte and may be simply assembled.

## Description

### Technical Field

The present disclosure relates to a secondary battery, and more particularly, to a secondary battery in which a cap assembly is coupled by a fixing element, and a current collector is inserted into the fixing element and the current collector and the fixing element are joined to each other.

### Background Art

Recently, as the demand for portable electronic devices has rapidly increased and the development of electric vehicles, energy storage batteries, robots, satellites, and the like has become more active, intensive research has been conducted on high-performance secondary batteries capable of repeated charging and discharging.

Secondary batteries may be classified, according to the shape of a battery casing, into a can-type secondary battery, in which an electrode assembly is embedded in a metal can, and a pouch-type secondary battery, in which an electrode assembly is embedded in a pouch formed of an aluminum laminate sheet. The can-type secondary battery may also be classified into a cylindrical secondary battery and a prismatic secondary battery according to the shape of the metal can.

In the can-type secondary battery, an electrode assembly is accommodated in a casing made of metal, and a cap assembly is coupled to an opening of the casing. When sealing between elements that form the cap assembly deteriorates, problems such as leakage of electrolyte may occur. In particular, sealing between a cap plate and an electrode terminal coupled along a through hole of the cap plate is considered important. To solve the aforementioned problems, when sealing of the cap assembly is reinforced, various sealing elements are employed, which causes complexity in the assembling process.

Accordingly, there is a need to develop a cap assembly of a secondary battery that may be simply assembled and prevent leakage of electrolyte.

### DISCLOSURE

### Technical Problem

An object of the present disclosure is to provide a secondary battery including a cap assembly that may prevent leakage of electrolyte and may be simply assembled.

Another object of the present disclosure is to provide a secondary battery including a cap assembly having enhanced contact force between components.

### Technical Solution

A secondary battery according to an embodiment of the present disclosure may include a casing, an electrode assembly, a current collector, and a cap assembly. The casing may be formed with an opening. The electrode assembly may be accommodated in the casing, and include an electrode portion and a plurality of electrode tabs. The electrode tables may be formed on the electrode portion. The current collector may include a current collector body and a current collecting protrusion. The current collector body may be electrically connected to the plurality of electrode tabs. The current collecting protrusion may protrude from the current collector body. The cap assembly may be coupled to the opening of the casing. The cap assembly may include a cap plate, an electrode terminal, a terminal insulator, a base insulator, and a fixing element. The cap plate may be formed with an electrolyte injection hole for injection of an electrolyte, and a through hole. The electrode terminal may be formed with a terminal hole. The electrode terminal may be coupled to the cap plate such that the through hole overlaps the terminal hole. The terminal insulator may be positioned between the electrode terminal and the cap plate. The base insulator may be positioned between the cap plate and the electrode assembly. A guide hole may be formed in the base insulator at a position corresponding to the electrolyte injection hole. The fixing element may include a body portion, a first fixing portion, and a second fixing portion. The body portion may have a hollow structure allowing the current collecting protrusion to be inserted thereinto, and may be inserted into the through hole and the terminal hole. The first fixing portion may extend from a first end of the body portion outward in a lateral direction. The second fixing portion may extend from a second end of the body portion outward in the lateral direction. The current collecting protrusion and the first fixing portion of the fixing element may be joined to each other.

In the secondary battery according to an embodiment of the present disclosure, the cap assembly may further include a gasket positioned between the cap plate and the fixing element.

In the secondary battery according to an embodiment of the present disclosure, the first fixing portion and the second fixing portion of the fixing element may be pressed in a direction toward the cap plate.

In the secondary battery according to an embodiment of the present disclosure, the first fixing portion and the electrode terminal may be welded to each other.

In the secondary battery according to an embodiment of the present disclosure, the electrode terminal may have a seating recess formed around the terminal hole so that the first fixing portion of the fixing element is positioned in the seating recess.

In the secondary battery according to an embodiment of the present disclosure, the first fixing portion of the fixing element may be seated to have a height lower than an upper end of the electrode terminal in a height direction.

In the secondary battery according to an embodiment of the present disclosure, the current collecting protrusion may be inserted into the body portion such that an upper end thereof in the height direction has a height equal to or lower than a height of the first fixing portion of the fixing element.

In the secondary battery according to an embodiment of the present disclosure, a first fixing recess may be formed around the current collecting protrusion in an upper surface of the current collector body in the height direction, the first fixing recess receiving and seating the second fixing portion therein.

In the secondary battery according to an embodiment of the present disclosure, the current collector body may be formed with a second protrusion, and the second fixing portion may be formed with a second fixing recess into which the second protrusion is inserted.

In the secondary battery according to an embodiment of the present disclosure, a first insulating tape may be attached to the current collector body electrically connected to the electrode assembly.

In the secondary battery according to an embodiment of the present disclosure, a second insulating tape may be attached to an outer surface of the electrode assembly on which the electrode tabs are not formed.

In the secondary battery according to an embodiment of the present disclosure, a third insulating tape may be attached to an outer surface of the casing that accommodates the electrode assembly and to which the cap assembly is coupled.

In the secondary battery according to an embodiment of the present disclosure, the base insulator may further include a guide portion protruding from the guide hole in a direction toward the electrode assembly.

In the secondary battery according to an embodiment of the present disclosure, the electrolyte injection hole may be formed with an injection protrusion at a lower end thereof, and the injection protrusion may be inserted into the guide hole.

In the secondary battery according to an embodiment of the present disclosure, a first opening and a second opening may be formed in the casing. The electrode assembly may include a plurality of first electrode tabs formed in a first direction, and a plurality of second electrode tabs formed in a second direction, and may be accommodated in the casing such that the first electrode tabs face the first opening, and the second electrode tabs face the second opening. The current collector may include a first current collector connected to the first electrode tabs, and a second current collector connected to the second electrode tabs. The cap assembly may include a first cap assembly coupled to the first opening, and a second cap assembly coupled to the second opening.

In the secondary battery according to an embodiment of the present disclosure, an electrode terminal of the first cap assembly may be made of a material identical to that of the fixing element. An electrode terminal of the second cap assembly may be made of a material different from that of the fixing element.

In the secondary battery according to an embodiment of the present disclosure, the plurality of electrode tabs may include a plurality of first electrode tabs and a plurality of second electrode tabs. The plurality of first electrode tabs may include a plurality of electrode tabs spaced apart from each other, bent onto the current collector body on opposite sides of the current collecting protrusion of the current collector, and welded to the current collector body. The plurality of second electrode tabs may include a plurality of electrode tabs spaced apart from each other, bent onto a corresponding current collector body on opposite sides of a current collecting protrusion of a current collector different from the current collector connected to the first electrode tabs, and welded to the current collector body.

In the secondary battery according to an embodiment of the present disclosure, the plurality of first electrode tabs and the plurality of second electrode tabs may be formed on the electrode assembly in different directions.

In the secondary battery according to an embodiment of the present disclosure, the electrode assembly may include a first electrode portion and a second electrode portion. The first electrode portion may include a first electrode tab and a second electrode tab. The second electrode portion may include a first electrode tab and a second electrode tab. The first electrode tab of the first electrode portion and the first electrode tab of the second electrode portion may be joined to an identical current collector. The second electrode tab of the first electrode portion and the second electrode tab of the second electrode portion may be joined to an identical current collector.

A secondary battery according to an embodiment of the present disclosure may include a casing, an electrode assembly, a current collector, and a cap assembly. The casing may be formed with an opening. The electrode assembly may include an electrode portion accommodated in the casing and a plurality of electrode tabs formed on one end of the electrode portion. The current collector may include a current collector body electrically connected to the electrode tabs, and a current collecting protrusion protruding from the current collector body. The cap assembly may be coupled to the opening of the casing. The cap assembly may include a cap plate, an electrode terminal, and a fixing element. The cap plate may be formed with a through hole. The electrode terminal may be formed with a terminal hole. The electrode terminal may be coupled to the cap plate such that the through hole overlaps the terminal hole. The fixing element may include a body portion, a first fixing portion, and a second fixing portion. The body portion may have a hollow structure allowing the current collecting protrusion to be inserted thereinto, and may be inserted into the through hole and the terminal hole. The first fixing portion may extend from a first end of the body portion outward in a lateral direction. The second fixing portion may extend from a second end of the body portion outward in the lateral direction.

In the secondary battery according to an embodiment of the present disclosure, the cap plate and the electrode terminal may be pressed by the fixing element.

In the secondary battery according to an embodiment of the present disclosure, the second fixing portion may be thicker than the first fixing portion in the height direction.

In the secondary battery according to an embodiment of the present disclosure, a maximum length of the second fixing portion extending outward in the lateral direction may be longer than a maximum length of the first fixing portion extending outward in the lateral direction.

In the secondary battery according to an embodiment of the present disclosure, the second fixing portion may be divided into a plurality of segments extending outward in the lateral direction.

In the secondary battery according to an embodiment of the present disclosure, a seating recess may be formed along a circumference of the terminal hole in an upper surface of the electrode terminal in the height direction so that the first fixing portion is seated in the seating recess.

In the secondary battery according to an embodiment of the present disclosure, the first fixing portion may be seated to have a height lower than an upper end of the electrode terminal in the height direction.

In the secondary battery according to an embodiment of the present disclosure, the cap assembly may further include a terminal insulator positioned between the electrode terminal and the cap plate.

In the secondary battery according to an embodiment of the present disclosure, a receiving recess may be formed along a circumference of the through hole in an upper surface of the cap plate in the height direction, and an insulating protrusion protruding toward the cap plate and received in the receiving recess may be formed on the terminal insulator.

In the secondary battery according to an embodiment of the present disclosure, the cap plate and the insulating protrusion may be spaced apart from each other such that a clearance is formed therebetween in the lateral direction.

In the secondary battery according to an embodiment of the present disclosure, the terminal insulator may be formed with a terminal recess in an upper surface thereof in the height direction, and the electrode terminal may be formed with a terminal protrusion protruding toward the terminal insulator and received in the terminal recess.

In the secondary battery according to an embodiment of the present disclosure, the terminal hole may have a smaller radius than the through hole, and the first fixing portion of the fixing element may extend beyond the terminal hole and further outward in the lateral direction than the through hole.

In the secondary battery according to an embodiment of the present disclosure, the cap assembly may further include a base insulator positioned between the cap plate and the electrode assembly.

In the secondary battery according to an embodiment of the present disclosure, the cap assembly may further include a gasket positioned between the cap plate and the fixing element.

In the secondary battery according to an embodiment of the present disclosure, the gasket may include an insertion portion and a support portion. The insertion portion may be inserted into the through hole. The support portion may be bent outward in the lateral direction from one end of the insertion portion and may be positioned between the cap plate and the second fixing portion.

In the secondary battery according to an embodiment of the present disclosure, the terminal hole may have a smaller radius than the through hole, and an upper end of the insertion portion of the gasket may contact a lower surface of the electrode terminal in the height direction.

In the secondary battery according to an embodiment of the present disclosure, the cap assembly may further include a base insulator positioned between the cap plate and the electrode assembly, and the support portion may be positioned parallel to the base insulator in the lateral direction.

In the secondary battery according to an embodiment of the present disclosure, the support portion and the base insulator may be spaced apart from each other such that a clearance is formed therebetween in the lateral direction.

In the secondary battery according to an embodiment of the present disclosure, the support portion of the gasket may have the same thickness as the base insulator in the height direction.

In the secondary battery according to an embodiment of the present disclosure, the second fixing portion may pass over the support portion and extend to cover at least a portion of the base insulator, with a portion thereof contacting the support portion.

In the secondary battery according to an embodiment of the present disclosure, the second fixing portion may have at least one first protrusion formed in a direction toward the cap plate, and at least one of the base insulator and the gasket may be formed with a fastening groove into which the first protrusion is inserted.

In the secondary battery according to an embodiment of the present disclosure, the gasket may be formed with a groove at a portion where the insertion portion and the support portion meet, and the cap plate may be formed with a gasket protrusion around the through hole, the gasket protrusion being inserted into the groove of the gasket.

In the secondary battery according to an embodiment of the present disclosure, the current collector body of the current collector and the second fixing portion may be coupled to each other in an interlocking manner.

### Advantageous Effects

A secondary battery according to an embodiment of the present disclosure may include a fixing element, thereby preventing leakage of electrolyte, and simplifying an assembling process.

In the secondary battery according to an embodiment of the present disclosure, contact force between components of a cap assembly is enhanced, and thus sealing performance is improved.

In the secondary battery according to an embodiment of the present disclosure, a thickness of the cap assembly may be reduced.

### Brief Description of Drawings

FIG. 1 is a perspective view illustrating a secondary battery according to an embodiment of the present disclosure.
FIG. 2 is an exploded perspective view illustrating a cap assembly separated from the secondary battery according to an embodiment of the present disclosure.
FIG. 3 is a perspective view illustrating an electrode assembly in which a plurality of first and second electrode tabs are formed on an electrode portion of a secondary battery according to an embodiment of the present disclosure.
FIGS. 4a and 4b are views illustrating a first electrode element and a second electrode element of the secondary battery according to an embodiment of the present disclosure.
FIG. 5 is an exploded view illustrating the cap assembly according to an embodiment of the present disclosure.
FIG. 6 is a conceptual view illustrating an electrode terminal and a terminal insulator seated on a cap plate according to an embodiment of the present disclosure.
FIG. 7 is a view illustrating lower surfaces of the electrode terminal and the terminal insulator according to an embodiment of the present disclosure.
FIGS. 8a and 8b are conceptual views illustrating formation of a first fixing portion of a fixing element according to an embodiment of the present disclosure.
FIG. 9 is a view illustrating various modifications of the fixing element according to an embodiment of the present disclosure.
FIGS. 10a and 10b are sectional views illustrating the cap assembly according to an embodiment of the present disclosure.
FIGS. 11a and 11b are sectional views illustrating a cap assembly having a groove formed therein according to another embodiment of the present disclosure.
FIG. 12 is a view illustrating the electrode terminal inserted into the cap assembly according to an embodiment of the present disclosure.
FIG. 13a is a view illustrating a current collector having a first fixing recess formed therein according to an embodiment of the present disclosure, and FIG. 13b is a view illustrating a second fixing portion of the fixing element seated on a current collector body having the first fixing recess formed therein.
FIG. 14 is a view illustrating the second fixing portion of the fixing element coupled to the current collector body according to an embodiment of the present disclosure.
FIG. 15a is a view illustrating the cap plate and a base insulator according to an embodiment of the present disclosure, and FIG. 15b is a view illustrating a lower surface of the base insulator.
FIG. 16 is a sectional view illustrating an electrolyte injection hole of the cap plate and a guide hole of the base insulator according to an embodiment of the present disclosure.
FIG. 17 is a conceptual view illustrating a process of coupling current collectors to electrode tabs in the secondary battery according to an embodiment of the present disclosure.
FIG. 18 is a conceptual view illustrating a process of coupling the cap assembly to the current collectors in the secondary battery according to an embodiment of the present disclosure.
FIG. 19 is a conceptual view illustrating a process of coupling current collectors to electrode tabs in the case where the electrode tabs are formed in opposite directions of an electrode assembly in a secondary battery according to another embodiment of the present disclosure.
FIG. 20 is a conceptual view illustrating a process of coupling cap assemblies to the current collectors in the secondary battery according to another embodiment of the present disclosure.
FIG. 21 is a conceptual view illustrating attachment of insulating tapes in a state where the electrode assembly and the current collector bodies are coupled according to an embodiment of the present disclosure.
FIG. 22 is a conceptual view illustrating a structure in which two electrode tabs having the same polarity are joined to each current collector according to another embodiment of the present disclosure.
FIG. 23 is a conceptual view illustrating a process of coupling a cap assembly to the current collectors in the secondary battery according to another embodiment of the present disclosure.
FIG. 24 is a conceptual view illustrating a structure of a secondary battery according to another embodiment of the present disclosure, in which electrode tabs having different polarities are formed in opposite directions of an electrode assembly, and two electrode tabs having the same polarity are joined to each current collector.
FIG. 25 is a conceptual view illustrating a process of coupling cap assemblies to current collectors in a secondary battery according to another embodiment of the present disclosure.
FIG. 26 is a view illustrating a secondary battery including two electrode portions according to another embodiment of the present disclosure.
FIG. 27 is a view illustrating a structure in which electrode tabs formed on two electrode portions are joined to electrode elements according to another embodiment of the present disclosure.

### Best Mode

Since the present disclosure may be modified in various forms, and may have various embodiments, particular embodiments will be illustrated in the accompanying drawings and described in detail with reference to the drawings. However, this is not intended to limit the present disclosure to particular modes of practice, and it is to be appreciated that all changes, equivalents, and substitutes that do not depart from the spirit and technical scope of the present disclosure are encompassed in the present disclosure.

The terminology used herein is for the purpose of describing particular embodiments only and is not intended to be limiting the present disclosure. In the present disclosure, the singular forms are intended to include the plural forms as well, unless the context clearly indicates otherwise. It will be further understood that the terms "include", "have", etc. when used in this specification, are intended to specify the presence of stated features, integers, steps, operations, elements, components, and/or combinations of them but do not preclude the presence or addition of one or more other features, integers, steps, operations, elements, components, and/or combinations thereof.

Hereinafter, exemplary embodiments of the present disclosure will be described in detail with reference to the accompanying drawings. It should be noted that like reference numerals refer to like elements throughout the attached drawings. Details of well-known configurations and functions may be omitted to avoid unnecessarily obscuring the gist of the present disclosure. For the same reason, in the accompanying drawings, some elements are enlarged, omitted, or depicted schematically.

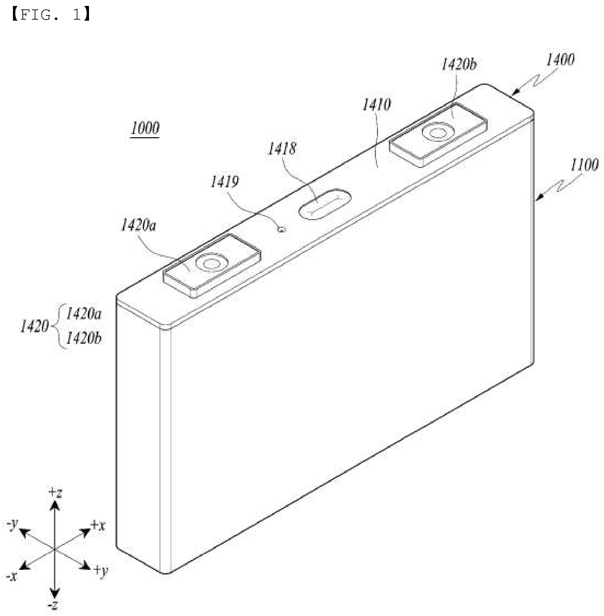

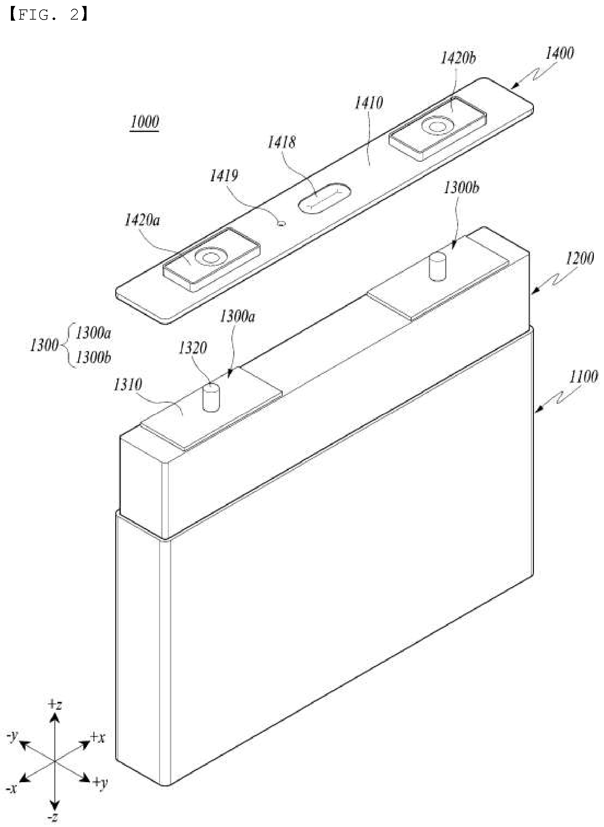

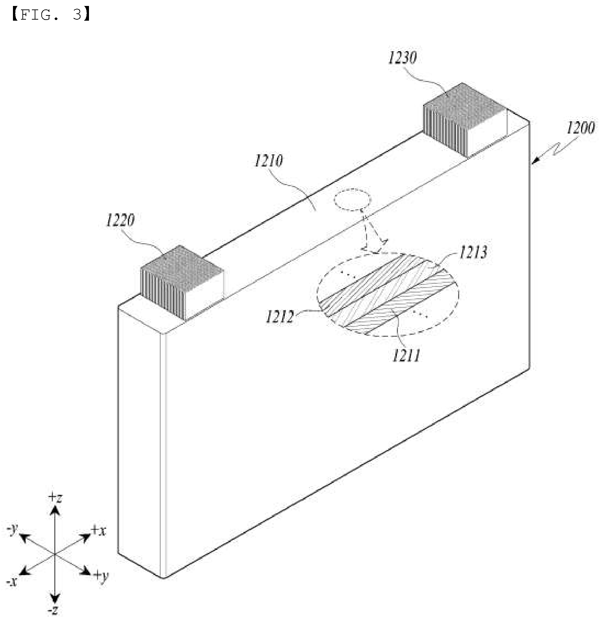

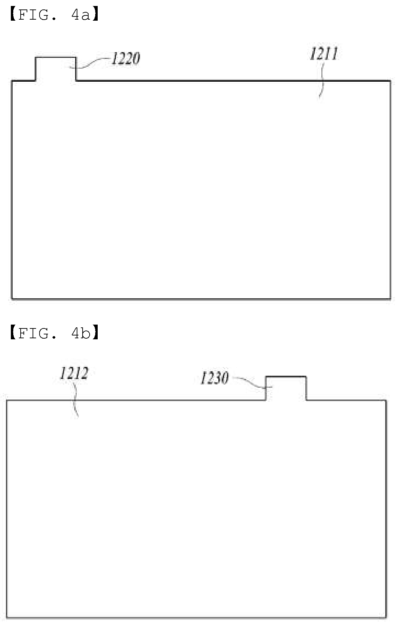

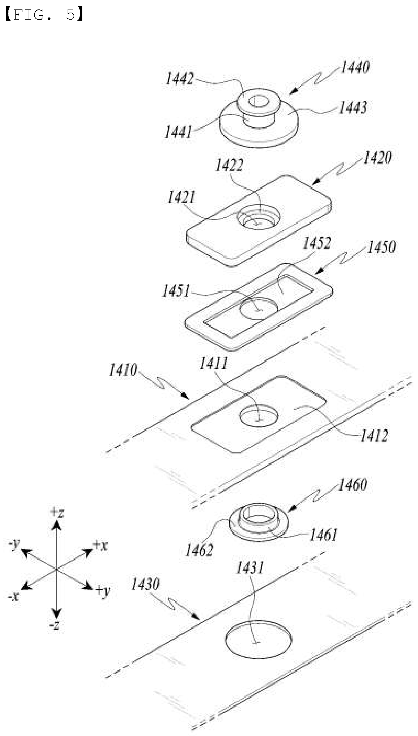

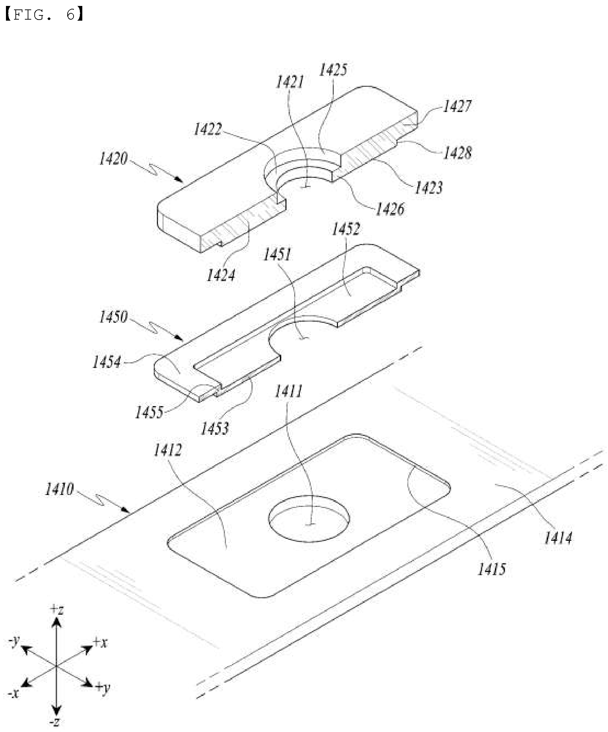

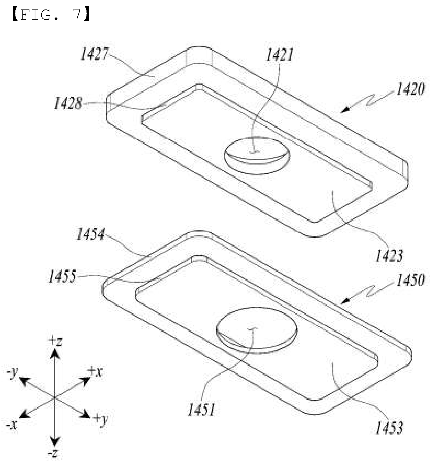

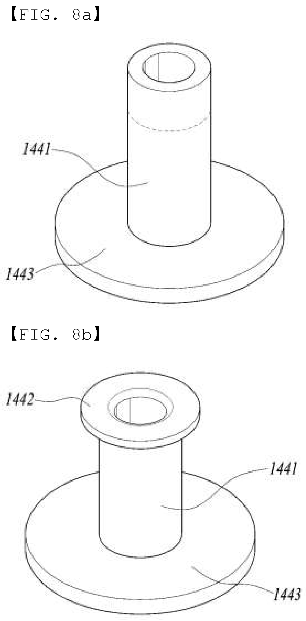

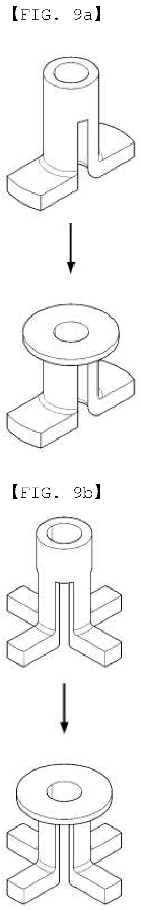

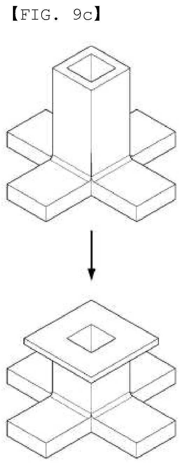

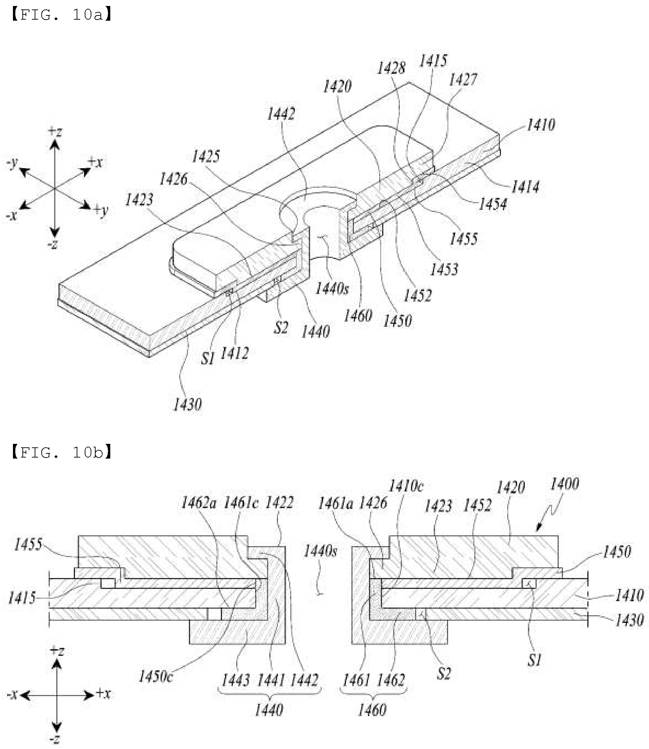

FIG. 1 is a perspective view illustrating a secondary battery according to an embodiment of the present disclosure. FIG. 2 is an exploded perspective view illustrating a cap assembly separated from the secondary battery according to an embodiment of the present disclosure. FIG. 3 is a perspective view illustrating an electrode assembly in which a plurality of first and second electrode tabs are formed on an electrode portion of a secondary battery according to an embodiment of the present disclosure. FIGS. 4a and 4b are views illustrating a first electrode element and a second electrode element of the secondary battery according to an embodiment of the present disclosure. FIG. 5 is an exploded view illustrating the cap assembly according to an embodiment of the present disclosure. FIG. 6 is a conceptual view illustrating an electrode terminal and a terminal insulator seated on a cap plate according to an embodiment of the present disclosure. FIG. 7 is a view illustrating lower surfaces of the electrode terminal and the terminal insulator according to an embodiment of the present disclosure. FIGS. 8a and 8b are conceptual views illustrating formation of a first fixing portion of a fixing element according to an embodiment of the present disclosure. FIG. 9 is a view illustrating various modifications of the fixing element according to an embodiment of the present disclosure. FIGS. 10a and 10b are sectional views illustrating the cap assembly according to an embodiment of the present disclosure.

In the present embodiment, a height direction may be defined as a z-axis direction (+Z or -Z direction), and a lateral direction may be defined as an x-axis or y-axis direction (+X, +Y, -X, or -Y direction). The height direction and the lateral direction may be perpendicular to each other.

As illustrated in FIGS. 1 to 10, a secondary battery 1000 according to an embodiment of the present disclosure may include a casing 1100, an electrode assembly 1200, current collectors 1300, and a cap assembly 1400.

Referring to FIGS. 1 and 2, the casing 1100 may form an outer shape of the secondary battery 1000. The casing 1100 may define a space capable of accommodating the electrode assembly 1200 therein, and may have an opening on one surface thereof. In the present embodiment, the casing 1100 has a rectangular parallelepiped shape, but is not limited thereto and may be modified in various ways. The casing 1100 may be made of a rigid material capable of protecting the electrode assembly 1200 accommodated therein. For example, the casing 1100 may be made of metal such as aluminum or stainless steel.

Electrolyte may be received together with the electrode assembly 1200 in the casing 1100. The electrolyte may include a lithium salt such as LiPF6 or LiBF4 in an organic solvent such as ethylene carbonate (EC), propylene carbonate (PC), diethyl carbonate (DEC), ethyl methyl carbonate (EMC), or dimethyl carbonate (DMC). The electrolyte may be in a liquid, solid, or gel phase.

The electrode assembly 1200 is accommodated in the casing 1100. Referring to FIG. 3, the electrode assembly 1200 may include an electrode portion 1210 and a plurality of electrode tabs 1220 and 1230.

Referring to FIGS. 3 to 4b, the electrode portion 1210 may include a plurality of first electrode elements 1211, a plurality of second electrode elements 1212, and separators 1213. An active material may be applied to the plurality of first electrode elements 1211 and the plurality of second electrode elements 1212. Each first electrode element 1211 may be formed by applying an active material such as a transition metal oxide to a metallic body made of aluminum. Each second electrode element 1212 may be formed by applying an active material such as graphite or carbon to a metallic body made of copper or nickel. The first electrode element 1211 and the second electrode element 1212 may have a metal plate shape, but the present disclosure is not limited thereto. The first electrode element 1211 may serve as a positive electrode plate, and the second electrode element 1212 may serve as a negative electrode plate.

The separators 1213 are positioned between the plurality of first and second electrode elements 1211 and 1212 to prevent a short circuit between the plurality of first and second electrode elements 1211 and 1212. The separators may be made of polyethylene, polypropylene, a composite material thereof, or the like.

The electrode portion 1210 may be formed by positioning the separators 1213 between the first electrode elements 1211 and the second electrode elements 1212, which are sequentially arranged. In other words, in an embodiment, the electrode portion 1210 may be formed by stacking the first electrode element 1211, the separator 1213, the second electrode element 1212, and the separator 1213 in the listed order. In another embodiment, the electrode portion 1210 may be formed by disposing the first electrode element 1211, the separator 1213, the second electrode element 1212 in the listed order, and then winding the disposed structure.

Although, in the present embodiment, the electrode assembly 1200 includes the single electrode portion 1210, in another embodiment, the electrode assembly 1200 may include a plurality of electrode portions 1210. The plurality of electrode portions 1210 may be electrically connected to one another.

The electrode tabs 1220 and 1230, to which no active material is applied, may be formed on one end of the plurality of first electrode elements 1211 and the plurality of second electrode elements 1212, respectively. The first electrode tab 1220 may be formed on each first electrode element 1211, and the second electrode tab 1230 may be formed on each second electrode element 1212. In an embodiment, each of the electrode elements 1211 and 1212 and the corresponding electrode tab 1220 or 1230 may be integrally formed by cutting a predetermined portion of a single metal plate using a laser or the like, such that the electrode element 1211 or 1212 and the electrode tab 1220 or 1230 remain. The plurality of electrode tabs 1220 and 1230 may be formed in a direction toward the cap assembly 1400. In another embodiment, the electrode tabs 1220 and 1230 separately formed may be attached to the electrode elements 1211 and 1212.

Referring to FIG. 3, when the plurality of first and second electrode elements 1211 and 1212 are stacked, the plurality of first electrode tabs 1220 may overlap one another at a first position, and the plurality of second electrode tabs 1230 may overlap one another at a second position. In other words, the plurality of first electrode tabs 1220 having the same polarity may be grouped at the first position, and the plurality of second electrode tabs 1230 may be grouped at the second position. The first position and the second position are spaced apart from each other on the electrode elements, and the plurality of first electrode tabs 1220 and the plurality of second electrode tabs 1230 that are respectively grouped may be spaced apart from each other in a longitudinal direction of the electrode assembly 1200.

The plurality of electrode tabs 1220 and 1230 that overlap at the respective positions may be joined to one another among the overlapping electrode tabs 1220 or among the overlapping electrode tabs 1230 by ultrasonic welding, laser welding, or the like, in order to facilitate current flow. The joined electrode tabs 1220 and 1230 may be respectively connected to the current collectors 1300.

In the present embodiment, the plurality of first and second electrode tabs 1220 and 1230 are disposed on one end of the electrode portion 1210. In another embodiment, the first electrode tabs 1220 may be disposed on one side surface of the electrode portion 1210, and the second electrode tabs 1230 may be disposed on another side surface of the electrode portion 1210.

Each current collector 1300 may include a current collector body 1310 and a current collecting protrusion 1320. The current collector body 1310 may be joined to the plurality of electrode tabs 1220 or 1230. The current collector body 1310 may be made of the same material as the plurality of electrode tabs 1220 and 1230. The current collecting protrusion 1320 may be formed to protrude from one surface of the current collector body 1310. An insulating material may be disposed under the current collector 1300. The insulating material may be an insulating plate or an insulating film.

Referring to FIG. 2, in the present embodiment, the current collectors 1300 may include a first current collector 1300a and a second current collector 1300b. The first current collector 1300a may be joined to the first electrode tabs 1220, and the second current collector 1300b may be joined to the second electrode tabs 1230. For joining each current collector 1300 and the electrode tabs 1220 or 1230, the electrode tabs 1220 or 1230 may be bent, the current collector 1300 may be placed on an upper portion of the electrode tabs 1220 or 1230, and the current collector body 1310 and the electrode tabs 1220 or 1230 may be welded from an upper side of the current collector body 1310. A method such as ultrasonic welding, laser welding, or the like may be used for the welding.

Referring to FIGS. 1 and 2, the cap assembly 1400 may be coupled to the opening of the casing 1100 to seal the opening of the casing 1100 in which the electrode assembly 1200 is accommodated. As illustrated in FIG. 5, the cap assembly 1400 may include a cap plate 1410, an electrode terminal 1420, a base insulator 1430, and a fixing element 1440.

The cap plate 1410 may have a plate shape covering the opening of the casing 1100, but the present disclosure is not limited thereto, and the cap plate 1410 may have various shapes capable of sealing the opening of the casing 1100. The cap plate 1410 may have a shape corresponding to that of the opening of the casing 1100. The cap plate 1410 may be formed of the same material as the casing 1100, and may be fixed to the casing 1100 by a method such as laser welding.

Referring to FIGS. 5 and 6, a through hole 1411 may be formed in the cap plate 1410. A body portion 1441 of the fixing element 1140 may pass through the through hole 1411 in the height direction.

A receiving recess 1412 may be formed in an upper surface of the cap plate 1410 in the height direction. The through hole 1411 may be formed to be open in the receiving recess 1412. The cap plate 1410 may include a plate body 1414. The plate body 1414 may have a flat plate shape. The receiving recess 1412 may be formed to be recessed from one surface of the plate body 1414. The cap plate 1410 may include a plate stepped portion 1415. The plate stepped portion 1415 may connect the receiving recess 1412 and the plate body 1414. The plate stepped portion 1415 may be a portion of the cap plate 1410 formed in the height direction (for example, +Z direction).

A vent portion 1418 and an electrolyte injection hole 1419 may be formed in the cap plate 1410. The vent portion 1418 may open when an internal pressure of the casing 1100 exceeds a reference value. In the present embodiment, the vent portion 1418 is formed in the cap plate 1410, but in another embodiment, the vent portion 1418 may be formed in the casing 1100. Electrolyte may be injected into the casing 1100 through the electrolyte injection hole 1419.

Referring to FIGS. 5 and 6, the electrode terminal 1420 may be seated on an upper portion of the cap plate 1410. The electrode terminal 1420 may include a first electrode terminal 1420a and a second electrode terminal 1420b. In the present embodiment, the electrode terminal 1420 may have a rectangular plate shape, but the present disclosure is not limited thereto, and various shapes may be possible.

A terminal hole 1421 may be formed in the electrode terminal 1420. When the electrode terminal 1420 is seated on the cap plate 1410, the through hole 1411 and the terminal hole 1421 may overlap and communicate with each other. The through hole 1411 and the terminal hole 1421 may have the same central axis. A radius of the through hole 1411 may be greater than a radius of the terminal hole 1421.

A seating recess 1422 may be formed around the terminal hole 1421 in the electrode terminal 1420. The terminal hole 1421 may be formed to be open inside the seating recess 1422. A first fixing portion 1442 of the fixing element 1440 may be seated in the seating recess 1422.

The electrode terminal 1420 may include a terminal protrusion 1423. The electrode terminal 1420 may include a terminal body 1424. The terminal protrusion 1423 may protrude from the terminal body 1424 toward the cap plate 1410. The terminal protrusion 1423 may contact a terminal insulator 1450. The electrode terminal 1420 may include a first peripheral wall 1425 and a second peripheral wall 1426. A diameter of the first peripheral wall 1425 may be greater than a diameter of the second peripheral wall 1426. The terminal hole 1422 may refer to a space enclosed by the first peripheral wall 1425 and the second peripheral wall 1426. At least a portion of the fixing element 1440 may be enclosed by the first peripheral wall 1425 and the second peripheral wall 1426. For example, the first fixing portion 1442 of the fixing element 1440 may be enclosed by the first peripheral wall 1425, and the body portion 1441 of the fixing element 1440 may be enclosed by the second peripheral wall 1426. The electrode terminal 1420 may include a terminal edge 1427. The terminal edge 1427 may be a portion of the terminal body 1424 that forms a side surface of the terminal body 1424. The terminal edge 1427 may protrude further in a lateral direction (for example, +X direction) than the terminal protrusion 1423. The electrode terminal 1420 may include a terminal stepped portion 1428. The terminal stepped portion 1428 may connect the terminal protrusion 1423 and the terminal edge 1427. The terminal stepped portion 1428 may be a portion of the electrode terminal 1420 that is formed in the height direction (for example, +Z direction).

Referring to FIG. 5, the base insulator 1430 may be positioned between the cap plate 1410 and the electrode assembly 1200. The base insulator 1430 may have a plate shape with the same length and width as the cap plate 1410. The base insulator 1430 may insulate the cap plate 1410 from the electrode assembly 1200. The base insulator 1430 may insulate the current collector body 1310 from the fixing element 1440. A base hole 1431 may be formed in the base insulator 1430 at a position corresponding to the through hole 1411 of the cap plate 1410. A radius of the base hole 1431 may be greater than the radius of the through hole 1411. In addition, the base insulator 1430 has an exhaust hole formed at a position corresponding to the vent portion 1418 of the cap plate 1410, and a guide hole formed at a position corresponding to the electrolyte injection hole 1419.

The fixing element 1440 may include the body portion 1441, the first fixing portion 1442, and a second fixing portion 1443. The body portion 1441 may have a hollow structure, and the current collecting protrusion 1320 of the current collector 1300 may be inserted into the hollow. The body portion 1441 may be inserted in the height direction through the through hole 1411 and the terminal hole 1421.

The first fixing portion 1442 may be bent and extended outward in a lateral direction from a first end of the body portion 1441. The first fixing portion 1442 may be seated in the seating recess 1422 of the electrode terminal 1420. The first fixing portion 1442 seated in the seating recess 1422 may be enclosed by the peripheral wall 1425 of the seating recess 1422. The first fixing portion 1442 seated in the seating recess 1422 may be welded to the electrode terminal 1420 along an outer circumference thereof. In the present embodiment, a depth of the seating recess 1422 in the height direction may be greater than a thickness of the first fixing portion 1442. Accordingly, the first fixing portion 1442 is seated to have a height lower than an upper end of the electrode terminal 1420 in the height direction. For example, an upper end of the first fixing portion 1442 in the height direction may be positioned 0.05 mm to 10 mm lower than the upper end of the electrode terminal 1420.

In the present embodiment, the seating recess 1422 may be formed further outward in a lateral direction than the through hole 1411 from a center of the terminal hole 1421. Accordingly, the first fixing portion 1442 may also extend further outward in the lateral direction than the through hole 1411. For example, in the lateral direction, the first fixing portion 1442 may be formed to be 10% to 50% larger than the through hole 1411. Through the foregoing structure, the first fixing portion 1442 may reliably press the electrode terminal 1420.

The second fixing portion 1443 may be bent and extended outward in the lateral direction from a second end of the body portion 1441. The second fixing portion 1443 may contact the base insulator 1430 at a lower side of the base insulator 1430.

Referring to FIG. 8a, the fixing element 1440 is inserted into the through hole 1411 and the terminal hole 1421 in a state in which the second fixing portion 1443 is formed on the second end of the body portion 1441. Thereafter, referring to FIG. 8b, the first fixing portion 1442 is formed by pressing and bending one side of the body portion 1441. In the case where the first fixing portion 1442 is pressed and bent in this way, the second fixing portion 1443 may be formed to be thicker in the height direction than the first fixing portion 1442. For example, a thickness of the second fixing portion 1443 may be 1.1 to 3 times as thick as a thickness of the first fixing portion 1442. The second fixing portion 1443 needs to be thicker than the first fixing portion 1442 so that the fixing element 1440 may be stably formed and may strongly press the cap plate 1410 and the electrode terminal 1420.

In addition, a maximum length of the second fixing portion 1443 in the lateral direction may be formed to be longer than a maximum length of the first fixing portion 1442 in the lateral direction. For example, the maximum length of the second fixing portion 1443 in the lateral direction may be 1.5 to 2 times as long as that of the first fixing portion 1442. Through the foregoing structure, the fixing element 1440 may increase contact force between components of the cap assembly 1400.

Referring to FIGS. 9a to 9c, the fixing element 1440 may have various shapes. The body portion 1441 of the fixing element 1440 may have various shapes such as a cylinder or a rectangular column. In this case, cross-sections of the through hole 1411 and the terminal hole 1421 may have the same shape as a cross-section of the body portion 1441. Shapes of the first fixing portion 1442 and the second fixing portion 1443 may also vary depending on the shape of the body portion 1441. The second fixing portion 1443 may be divided into a plurality of segments to facilitate bending. That is, the second fixing portion 1443 may be divided into a plurality of segments extending outward in the lateral direction. The first fixing portion 1442 may also be divided into a plurality of segments, but the first fixing portion 1442 may be integrally formed for sealing.

After the fixing element 1440 is mounted to the cap assembly 1400, the first fixing portion 1442 and the second fixing portion 1443 may be pressed in a direction toward the cap plate 1410. This indicates that at least one of the cap plate 1410, the electrode terminal 1420, and the base insulator 1430 of the cap assembly 1400 may be pressed by the fixing element 1443. Accordingly, components constituting the cap assembly 1400 may be closely coupled to each other, thereby increasing airtightness of the cap assembly 1400.

Referring to FIGS. 5 to 7, the cap assembly 1400 may include the terminal insulator 1450. The terminal insulator 1450 may be positioned between the electrode terminal 1420 and the cap plate 1410. The terminal insulator 1450 may insulate the cap plate 1410 from the electrode terminal 1420. The terminal insulator 1450 may have a shape enclosing an entire side surface of the electrode terminal 1420, the side surface extending in the height direction. In another embodiment, the terminal insulator 1450 may have a shape enclosing only a portion of the side surface of the electrode terminal 1420, the side surface extending in the height direction. An insulator hole 1451 may be formed in the terminal insulator 1450 at a position corresponding to the through hole 1411 of the cap plate 1410. The size of the insulator hole 1451 may be equal to or smaller than that of the through hole 1411.

On an upper surface of the terminal insulator 1450 in the height direction, a terminal recess 1452 may be formed. The terminal recess 1452 may be formed around the terminal insulating hole 1451. A portion of the electrode terminal 1420 may be received in the terminal recess 1452. To this end, the terminal protrusion 1423 protruding toward the terminal insulator 1450 may be formed on the electrode terminal 1420. The terminal recess 1452 may have a shape and a size capable of receiving the terminal protrusion 1423. In an embodiment, the terminal recess 1452 may have the same shape and size as the terminal protrusion 1423. The reception of the terminal protrusion 1423 in the terminal recess 1452 may allow the electrode terminal 1420 to be stably seated and may facilitate assembly of the electrode terminal 1420 and the terminal insulator 1450.

An insulating protrusion 1453 protruding toward the cap plate 1410 in the height direction may be formed on the terminal insulator 1450. The insulating protrusion 1453 may be received in the receiving recess 1412 formed on the upper surface of the cap plate 1410 in the height direction. The size of the receiving recess 1412 may be formed larger than the size of the insulating protrusion 1453. Accordingly, the cap plate 1410 and the insulating protrusion 1453 may be spaced apart from each other in the lateral direction, and a clearance S1 may be formed between the cap plate 1410 and the insulating protrusion 1453. For example, a lateral spacing distance of the clearance S1 may be 0.1 mm to 10 mm. The formation of the clearance S1 may facilitate the assembly of the cap assembly 1400.

Referring to FIGS. 10a and 10b, the cap plate 1410, the electrode terminal 1420, the base insulator 1430, and the terminal insulator 1450 may be stacked along the height direction.

In the height direction, the terminal insulator 1450 may be stacked on the upper portion of the cap plate 1410. The insulating protrusion 1453 of the terminal insulator 1450 may be seated in the receiving recess 1412 of the cap plate 1410. The plate stepped portion 1415 may face an insulating stepped portion 1455. The plate stepped portion 1415 and the insulating stepped portion 1455 may be aligned in the lateral direction (for example, +X direction). For example, the plate stepped portion 1415 and the insulating stepped portion 1455 may have the same length in the height direction (for example, +Z direction) and may be positioned at the same height in the height direction (for example, +Z direction). The plate stepped portion 1415 and the insulating stepped portion 1455 may be spaced apart from each other in the lateral direction (the +X direction). The clearance S1 between the cap plate 1410 and the insulating protrusion 1453 may be formed as a clearance S1 between the plate stepped portion 1415 and the insulating stepped portion 1455.

The electrode terminal 1420 may be stacked on an upper portion of the terminal insulator 1450 in the height direction. The terminal protrusion 1423 of the electrode terminal 1420 may be seated in the terminal recess 1452 of the terminal insulator 1450. The insulating stepped portion 1455 may face the terminal stepped portion 1428. The insulating stepped portion 1455 and the terminal stepped portion 1428 may be aligned in the lateral direction. For example, the insulating stepped portion 1455 and the terminal stepped portion 1428 may have the same length in the height direction and may be positioned at the same height in the height direction. The terminal edge 1427 of the electrode terminal 1420 may be seated on the insulating body 1454 of the terminal insulator 1450. The insulating body 1454 may be disposed between the terminal edge 1427 and the plate body 1414, and may be pressed by the terminal edge 1427 and the plate body 1414. Due to the aforementioned structure, a thickness of the cap assembly 1400 may be reduced. For example, by seating the terminal protrusion 1423 in the terminal recess 1452 and positioning the insulating stepped portion 1455 and the terminal stepped portion 1428 at the same height, a relative position of the electrode terminal 1420 with respect to the terminal insulator 1450 may be fixed, and a thickness occupied by the terminal insulator 1450 and the electrode terminal 1420 may be reduced. In addition, due to the aforementioned structure, occurrence of an electrical short circuit may be prevented in the cap assembly 1400. For example, because the terminal protrusion 1423 is seated in the terminal recess 1452 and the insulating stepped portion 1455 supports the terminal stepped portion 1428 inward in a radial direction, the position of the electrode terminal 1420 may be fixed, thereby preventing an electrical short circuit. Furthermore, as the insulating body 1454 is pressed between the terminal edge 1427 and the plate body 1414, the position of the terminal insulator 1450 may be fixed, thereby preventing the electrical short circuit.

Referring to FIG. 5, the cap assembly 1400 may further include a gasket 1460. The gasket 1460 may be disposed between the cap plate 1410 and the fixing element 1440. The gasket 1460 may prevent electrolyte or gas inside the casing 1100 from leaking to the outside, and may prevent moisture or air from penetrating from outside the casing 1100 into the inside of the casing 1100.

In the present embodiment, the gasket 1460 may include an insertion portion 1461 and a support portion 1462. The insertion portion 1461 may have a hollow structure and may be inserted into the through hole 1411. The insertion portion 1461 may have a cylindrical shape with a height in a height direction. The insertion portion 1461 may be disposed between the cap plate 1410 and the body portion 1441. The insertion portion 1461 may be disposed between the terminal insulator 1450 and the body portion 1441. The hollow of the insertion portion 1461 may have the same central axis as the through hole 1411 and the hollow of the body portion 1441.

The support portion 1462 may have a flat plate shape bent outward in the lateral direction from one end of the insertion portion 1461. The support portion 1462 may be disposed between the cap plate 1410 and the second fixing portion 1443. The support portion 1462 may be pressed by the second fixing portion 1443.

The support portion 1462 may be positioned parallel to the base insulator 1430 in the lateral direction. Accordingly, the support portion 1462 and the base insulator 1430 may have the same height. The support portion 1462 may be spaced apart from the base insulator 1430 in the lateral direction so that a clearance S2 is formed therebetween. For example, a lateral interval of the clearance S2 may range from 0.1 mm to 10 mm.

As such, because the support portion 1462 and the base insulator 1430 are spaced apart from each other, a process of assembling the cap assembly 1400 may be facilitated. For example, as the clearance S2 is formed between the gasket 1460 and the base insulator 1430, friction between the gasket 1460 and the base insulator 1430 may be reduced, thereby reducing force required for assembling the gasket 1460. In addition, as the support portion 1462 and the base insulator 1430 are disposed at the same height and are pressed in the height direction by the second fixing portion 1443, the positions of the support portion 1462 and the base insulator 1430 may be firmly fixed. Furthermore, due to the foregoing structure, the thickness of the cap assembly 1400 may be reduced. For example, merely a process of positioning the support portion 1462 and the base insulator 1430 at the same height and pressing the support portion 1462 and the base insulator 1430 with the second fixing portion 1443 may enable the support portion 1462 and the base insulator 1430 to be aligned at the same height, thereby reducing a thickness occupied by the gasket 1460 and the base insulator 1430.

In the present embodiment, the second fixing portion 1443 of the fixing element 1440 may extend beyond the support portion 1462 of the gasket 1460 so as to cover at least a portion of the base insulator 1430. Accordingly, the second fixing portion 1443 may block the clearance S2 between the support portion 1462 and the base insulator 1430, thereby enhancing a sealing effect. In this case, a thickness of the support portion 1462 and a thickness of the base insulator 1430 may be formed to be the same in the height direction, so that the second fixing portion 1443 may be brought into close contact with both the base insulator 1430 and the support portion 1462, thereby maintaining airtightness.

The gasket 1460 may include a thermally deformable material. For example, the gasket 1460 may include a rubber material. As the clearance S2 is formed between the support portion 1462 of the gasket 1460 and the base insulator 1430, even if the gasket 1460 expands due to heat, contact between the expanded gasket 1460 and the base insulator 1430 may be suppressed, thereby preventing damage to the gasket 1460 caused by friction between the gasket 1460 and the base insulator 1430.

The radius of the terminal hole 1421 may be smaller than the radius of the through hole 1411. For example, the radius of the terminal hole 1421 may be 75% to 95% of the radius of the through hole 1411. Accordingly, a lower surface of the electrode terminal 1420 may be partially exposed to the through hole 1411 around the terminal hole 1421. An upper end of the insertion portion 1461 of the gasket 1460 may contact the lower surface of the electrode terminal 1420 that is exposed to the through hole 1411 in the height direction. Therefore, the sealing effect of the gasket 1460 may be increased.

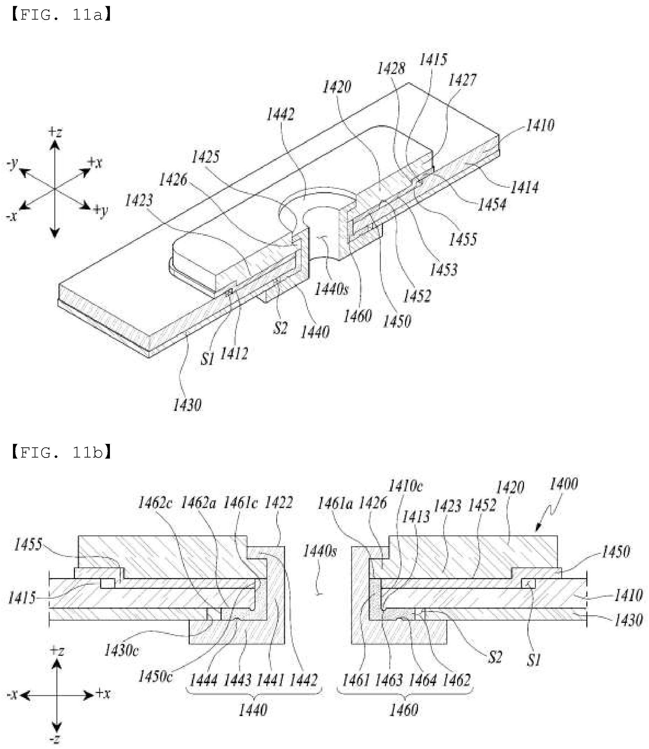

FIGS. 11a and 11b are sectional views illustrating a cap assembly having a groove formed therein according to another embodiment of the present disclosure.

Referring to FIGS. 11a and 11b, a cap assembly 1400 may include a cap plate 1410, an electrode terminal 1420, a base insulator 1430, a fixing element 1440, a terminal insulator 1450, and a gasket 1460. A detailed description of contents identical to those described with reference to FIGS. 1 to 10b will be omitted hereinafter.

The gasket 1460 may have a groove 1463 formed at a portion where the insertion portion 1461 and the support portion 1462 contact each other. The groove 1463 may be continuously formed along an outer circumference of the insertion portion 1461. A depth of the groove 1463 may range from 0.1 mm to 5 mm. The cap plate 1410 may have a gasket protrusion 1413 formed at a lower end of the through hole 1411. The gasket protrusion 1413 may be inserted into the groove 1463. A shape of the gasket protrusion 1413 may be formed to correspond to a shape of the groove 1463. When the gasket protrusion 1413 is inserted into the groove 1463, the gasket 1460 and the cap plate 1410 are tightly coupled to each other, thereby improving sealing performance of the gasket 1460.

The second fixing portion 1443 of the fixing element 1440 may have a first protrusion 1444 formed in a direction toward the cap plate 1410. The first protrusion 1444 may be provided in plurality. Corresponding to the first protrusion 1444, a fastening groove 1464 may be formed in the support portion 1462 of the gasket 1460. The first protrusion 1444 may be inserted into the fastening groove 1464. In another embodiment, the fastening groove 1464 may be formed in at least one of the base insulator 1430 or the gasket 1460. The fastening groove 1464 may be formed in the same number as the first protrusion 1444. Coupling the first protrusion 1440 and the fastening groove 1464 may enable the fixing element 1440 to be stably fixed.

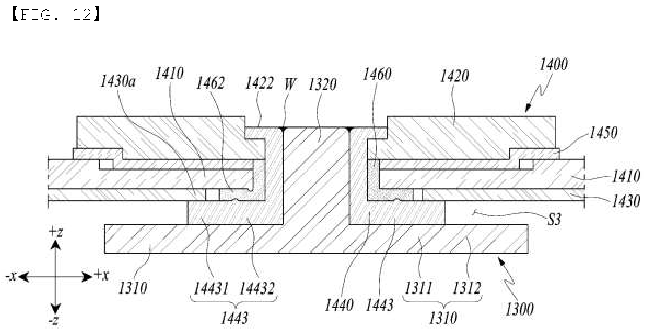

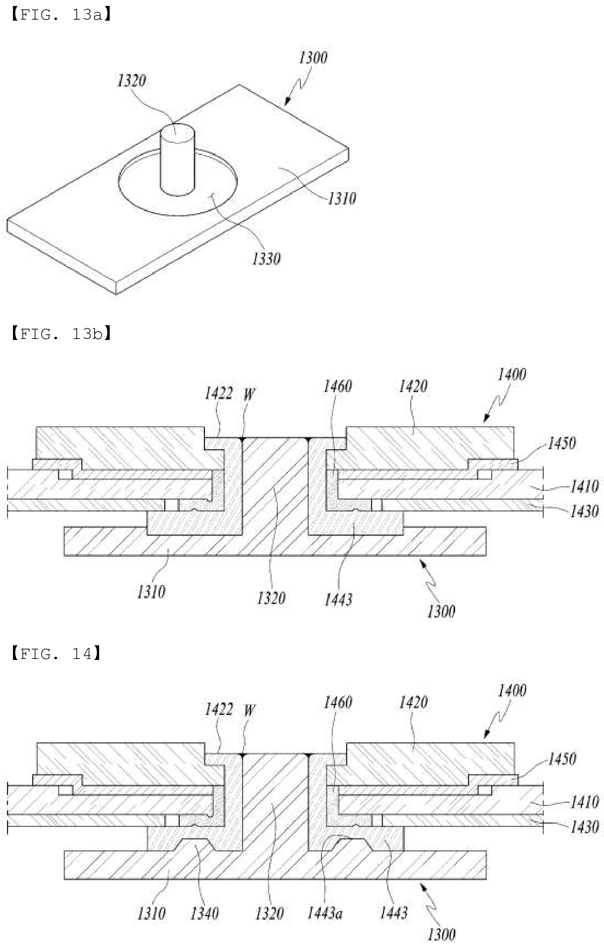

FIG. 12 is a view illustrating the electrode terminal inserted into the cap assembly according to an embodiment of the present disclosure. FIG. 13a is a view illustrating a current collector having a first fixing recess formed therein according to an embodiment of the present disclosure, and FIG. 13b is a view illustrating a second fixing portion of the fixing element seated on a current collector body having the first fixing recess formed therein. FIG. 14 is a view illustrating the second fixing portion of the fixing element coupled to the current collector body according to an embodiment of the present disclosure.

Referring to FIG. 12, the cap assembly 1400 according to an embodiment of the present disclosure may be coupled to the current collector 1300. Coupling of the cap assembly 1400 and the current collector 1300 may be achieved by insertion of the current collecting protrusion 1320 into the hollow formed in a body portion 1441 of the fixing element 1440. To this end, the size of the current collecting protrusion 1320 may be formed to be equal to or slightly larger than the hollow of the body portion 1441. When the cap assembly 1400 and the current collector 1300 are coupled to each other, the current collector body 1310 may contact the second fixing portion 1443 of the fixing element 1440.

After the coupling of the cap assembly 1400 and the current collector 1300, the current collecting protrusion 1320 and the first fixing portion 1442 of the fixing element 1440 may be welded to each other. More specifically, welding may be performed along an outer circumference of an upper end of the current collecting protrusion 1320 by using a method such as ultrasonic welding or laser welding. To achieve smooth and continuous welding, the outer circumference of the current collecting protrusion 1320 and an inner side of the first fixing portion 1442 may be rounded or chamfered.

When the current collecting protrusion 1320 is inserted into the hollow formed in the body portion 1441 of the fixing element 1440, the upper end of the current collecting protrusion 1320 may be positioned at the same height as the first fixing portion 1442 of the fixing element 1440 in the height direction. In another embodiment, the upper end of the current collecting protrusion 1320 may be positioned at a height lower than the first fixing portion 1442 of the fixing element 1440 in the height direction. Since the first fixing portion 1442 is positioned at a height lower than an upper end of an electrode terminal 1420, the upper end of the current collecting protrusion 1320 is also positioned at a height lower than the upper end of the electrode terminal 1420. Accordingly, a welded portion W is prevented from protruding upward beyond the electrode terminal 1420.

The current collector body 1310 of the current collector 1300 may be joined to the corresponding electrode tabs 1220 or 1230 of the electrode assembly 1200. Because the current collecting protrusion 1320 protruding from one surface of the current collector body 1310 is connected to the electrode terminal 1420 through the fixing element 1440, the electrode assembly 1200 is electrically connected to the electrode terminal 1420.

In the present embodiment, the current collector body 1310 of the current collector 1300 and the second fixing portion 1443 may be coupled to each other in an interlocking manner.

In an embodiment, referring to FIGS. 13a and 13b, the current collector 1300 may have a first fixing recess 1330 formed in the upper surface of the current collector body 1310. The first fixing recess 1330 may be formed around the current collecting protrusion 1320 with the current collecting protrusion 1320 as a center. When the cap assembly 1400 and the current collector 1300 are coupled to each other, the second fixing portion 1443 of the fixing element 1440 may be received and seated in the first fixing recess 1330. Accordingly, the current collector 1300 and the fixing element 1440 are stably coupled to each other.

In another embodiment, referring to FIG. 14, the current collector 1300 may have a second protrusion 1340 formed on the upper surface of the current collector body 1310. A second fixing recess 1443a, into which the second protrusion 1340 is inserted, may be formed in the second fixing portion 1443 of the fixing element 1440. As the second protrusion 1340 is inserted into the second fixing recess 1443a, the current collector 1300 and the fixing element 1440 are stably coupled to each other.

In the case where the current collector 1300 and the fixing element 1440 are stably coupled in the manner described with reference to FIGS. 13a to 14, the current collecting protrusion 1340 and the hollow of the body portion 1441 of the fixing element 1440 may be easily aligned concentrically. In addition, the height of the upper end of the current collecting protrusion 1340 and the height of the first fixing portion 1442 of the fixing element 1440 may be easily aligned. Accordingly, assemblability of the cap assembly 1400 may be improved.

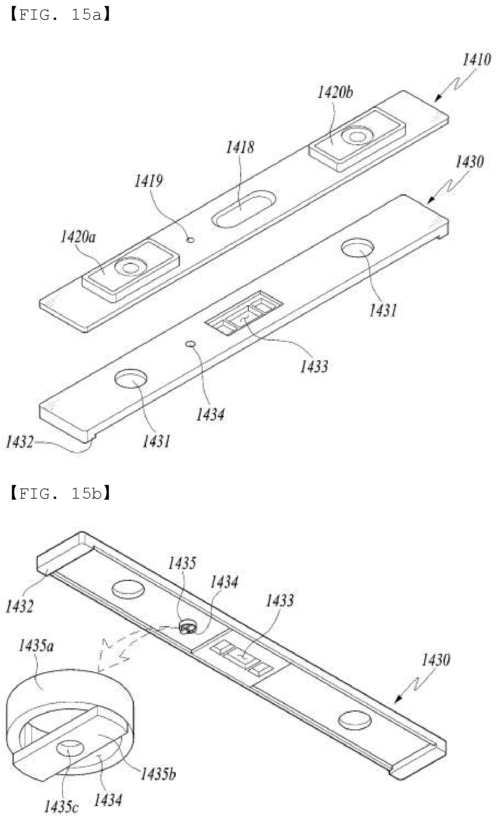

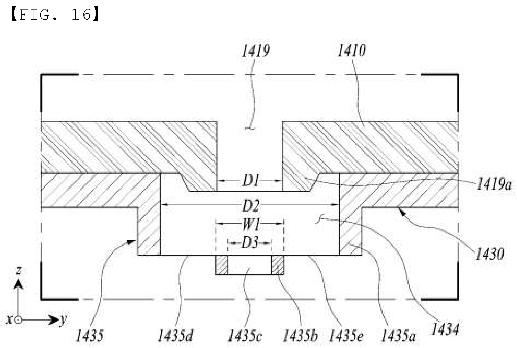

FIG. 15a is a view illustrating the cap plate and the base insulator according to an embodiment of the present disclosure, and FIG. 15b is a view illustrating a lower surface of the base insulator. FIG. 16 is a sectional view illustrating the electrolyte injection hole of the cap plate and the guide hole of the base insulator according to an embodiment of the present disclosure.

Referring to FIGS. 15a to 16, the cap plate 1410 and the base insulator 1430 may each have a rectangular plate shape. The base insulator 1430 may have, at opposite ends thereof, two support protrusions 1432 that protrude in a direction opposite to the position of the cap plate 1410. The vent portion 1418 and the electrolyte injection hole 1419 may be formed in the cap plate 1410. The exhaust hole 1433 and the guide hole 1434 may be formed in the base insulator 1430.

The exhaust hole 1433 is located below the vent portion 1418 and has a plurality of discharge openings. In the case where the exhaust hole 1433 is formed in the base insulator 1430 as described above, the vent portion 1418 is ruptured at a preset reference pressure when an internal pressure of the casing 1100 increases, so that gas inside the casing 1100 may be easily discharged to the outside.

The guide hole 1434 is located below the electrolyte injection hole 1419. An injection protrusion 1419a is formed at a lower end of the electrolyte injection hole 1419 and is inserted into an upper portion of the guide hole 1434. A guide portion 1435 is formed around the guide hole 1434 in a direction toward the electrode assembly. The guide portion 1435 may include a guide rim 1435a that encloses a lower portion of the guide hole 1434, a support bar 1435b positioned under the guide hole 1434 to partially block the guide hole 1434, and an internal hole 1435c formed in the support bar 1435b to move fluid. The guide rim 1435a may be formed in a circular ring shape. The support bar 1435b may be formed in a linear bar shape. The support bar 1435b may be fixed to a lower end of the guide rim 1435a and may extend in a diameter direction of the guide hole 1434. The internal hole 1435c may be positioned at a center in a longitudinal direction of the support bar 1435b and may be formed to face the electrolyte injection hole 1419. A diameter D3 of the internal hole 1435c is smaller than a diameter D1 of the electrolyte injection hole 1419. The internal hole 1435c may be positioned inside a lower region corresponding to the electrolyte injection hole 1419.

A diameter D2 of the guide hole 1434 may be formed to be greater than the diameter D1 of the electrolyte injection hole 1419. A width W1 of the support bar 1435b may be 0.2 to 0.6 times the diameter D2 of the guide hole 1434. However, the width W1 of the support bar 1435b is formed to be greater than the diameter D1 of the electrolyte injection hole 1419 and may be 1.1 to 1.5 times the diameter D1 of the electrolyte injection hole 1419.

In the case where the guide portion 1435 is formed in the base insulator 1430, the electrolyte injection hole 1419 may be prevented from being blocked due to lower structures, and the injection of the electrolyte may be facilitated. In particular, because the internal hole 1435c is positioned directly below the electrolyte injection hole 1419, the electrolyte may move into the casing 1100 through the internal hole 1435c, thereby not only preventing the electrolyte from flowing backward but also allowing the electrolyte to be injected into the casing 1100 through a first opening 1435d and a second opening 1435e formed on opposite sides of the support bar 1435b in the case where the internal hole 1435c is blocked or a large amount of the electrolyte is supplied.

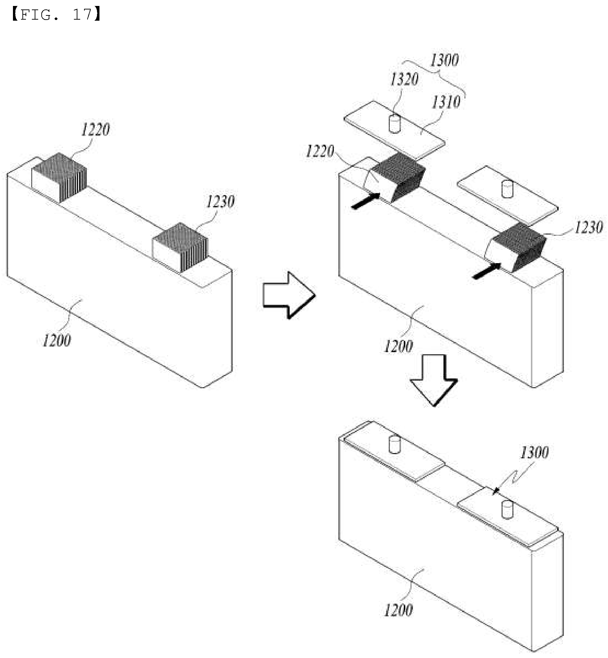

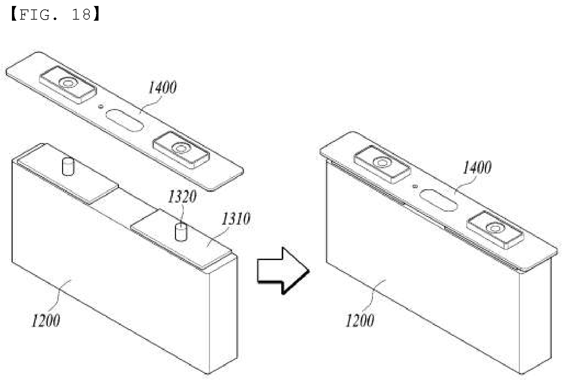

FIG. 17 is a conceptual view illustrating a process of coupling the current collectors to the electrode tabs in the secondary battery according to an embodiment of the present disclosure. FIG. 18 is a conceptual view illustrating a process of coupling the cap assembly to the current collectors in the secondary battery according to an embodiment of the present disclosure.

Referring to FIGS. 17 and 18, the electrode tabs 1220 and 1230 of the electrode assembly 1200 in the secondary battery according to an embodiment of the present disclosure are welded to the current collectors 1300. To this end, the first electrode tabs 1220 are welded to one another among the first electrode tabs 1220, and the second electrode tabs 1230 are welded to one another among the second electrode tabs 1230.

The welded electrode tabs 1220 and 1230 are bent by applying force thereto in a bending direction, and in the bent state, the current collectors 1300 are respectively positioned on the upper portions of the electrode tabs 1220 and 1230. The electrode tabs 1220 and 1230 are respectively joined to the current collector bodies 1310 of the current collectors 1300 by welding on the upper sides of the current collector bodies 1310.

After the electrode tabs 1220 and 1230 and the current collectors 1300 are welded to each other, the electrode assembly 1200 is accommodated in the casing 1100. The opening is formed in one surface of the casing 1100, and the current collecting protrusions 1310 are exposed to the outside through the opening. The cap assembly 1400 is coupled to the casing 1100. The cap assembly 1400 is coupled to the casing 1100 such that the current collecting protrusions 1310 of the current collector bodies 1300 are inserted into the hollows of the corresponding fixing elements.

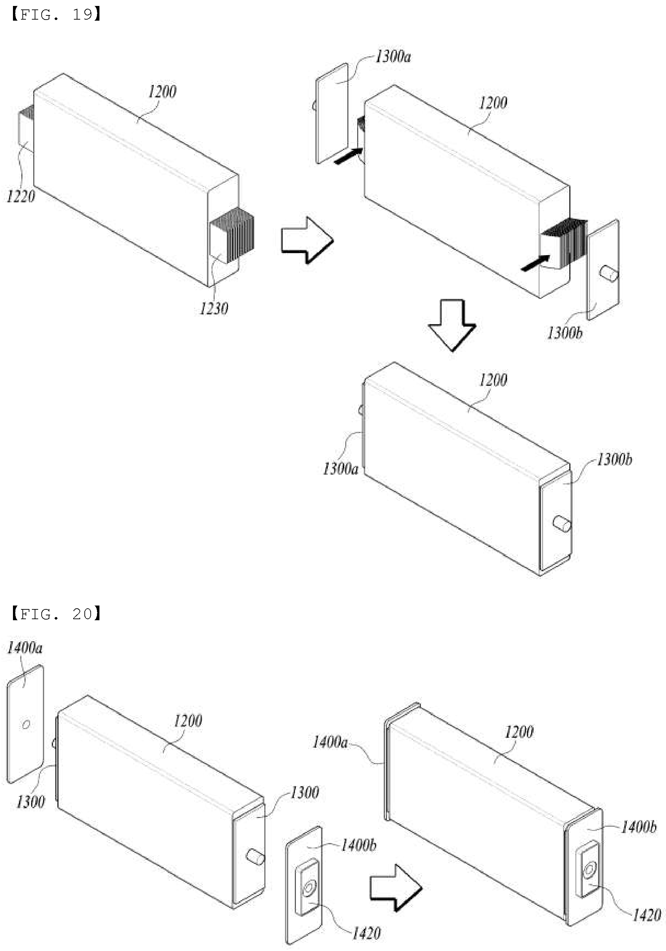

FIG. 19 is a conceptual view illustrating a process of coupling current collectors to electrode tabs in the case where the electrode tabs are formed in opposite directions of an electrode assembly in a secondary battery according to another embodiment of the present disclosure. FIG. 20 is a conceptual view illustrating a process of coupling cap assemblies to the current collectors in the secondary battery according to another embodiment of the present disclosure.

Referring to FIGS. 19 and 20, in the secondary battery according to another embodiment of the present disclosure, the first electrode tabs 1220 and the second electrode tabs 1230 are disposed on different sides of the electrode assembly 1200. That is, the first electrode tabs 1220 are formed in a first direction, and the second electrode tabs 1230 are formed in a second direction. The first current collector 1300a is positioned on the upper portion of the first electrode tabs 1220, and the second current collector 1300b is positioned on the upper portion of the second electrode tabs 1230. Accordingly, the current collector bodies 1310 are respectively positioned on the upper portions of the electrode tabs 1220 and 1230, and the electrode tabs 1220 and 1230 and the current collector bodies 1310 are welded to each other.

After the electrode tabs 1220 and 1230 and the current collectors 1300 are welded to each other, the electrode assembly 1200 is accommodated in the casing 1100. A first opening and a second opening are respectively formed in one surface and another surface of the casing 1100, and the current collecting protrusions 1310 of the current collectors 1300 joined to the electrode tabs 1220 and 1230 are exposed to the outside through the respective openings. The cap assemblies 1400 are coupled to the respective openings of the casing 1100 while the current collecting protrusions 1310 of the current collector bodies 1300 are inserted into the hollows of the fixing elements. A first cap assembly 1400a is coupled to the first opening, and a second cap assembly 1400b is coupled to the second opening.

An electrode terminal of the first cap assembly 1400a may be a positive electrode terminal, and an electrode terminal of the second cap assembly 1400b may be a negative electrode terminal. In this case, the electrode terminal of the first cap assembly 1400a may be made of the same material as the corresponding fixing element, and the electrode terminal of the second cap assembly 1400b may be made of a material different from the corresponding fixing element.

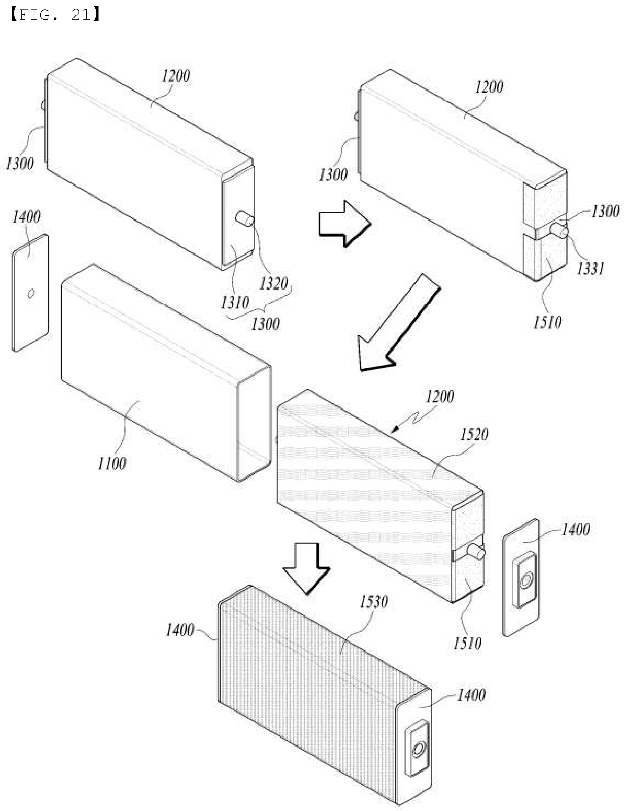

FIG. 21 is a conceptual view illustrating attachment of insulating tapes in a state where the electrode assembly and the current collector bodies are coupled according to an embodiment of the present disclosure.

Referring to FIG. 21, in the secondary battery according to an embodiment of the present disclosure, the two current collectors 1300 are joined to the electrode tabs on different sides of the electrode assembly 1200. After the electrode assembly 1200 and the current collectors 1300 are joined, a first insulating tape 1510 may be attached to each of the current collectors 1300. The first insulating tape 1510 may cover the current collector body 1310 on opposite sides of the current collecting protrusion 1320 and may extend to the electrode assembly 1200 and be attached thereto. The first insulating tape 1300 may enable the current collector 1300 to be stably fixed in place, and may prevent a short circuit between the electrode tabs and the cap assembly 1400.

After attaching the first insulating tape 1510, the entirety of a portion of an outer surface of the electrode assembly 1200 on which no electrode tabs are formed is wrapped with a second insulating tape 1520, and the electrode assembly 1200 is inserted into the casing 1100. The casing 1100 and the electrode assembly 1200 may be insulated from each other by the second insulating tape 1520.

After the electrode assembly 1200 is inserted into the casing 1100, the cap assembly 1400 is coupled to the opening of the casing 1100. An outer surface of the casing 1100 is wrapped with a third insulating tape 1530, thereby completing fabrication of the secondary battery.

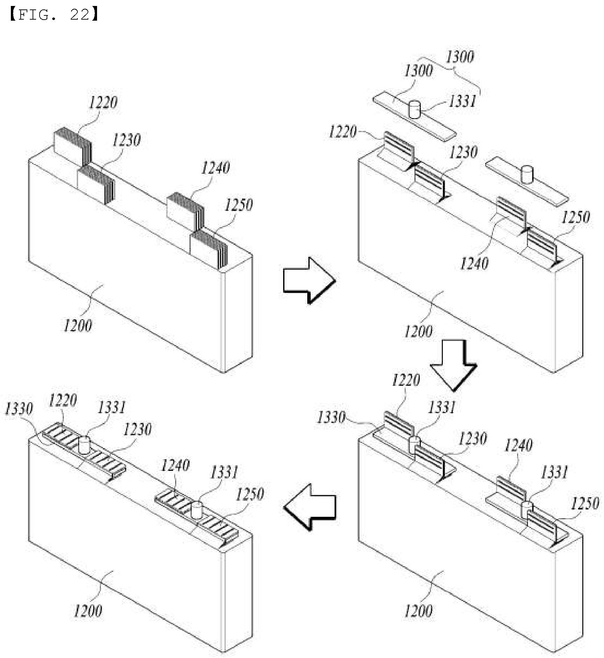

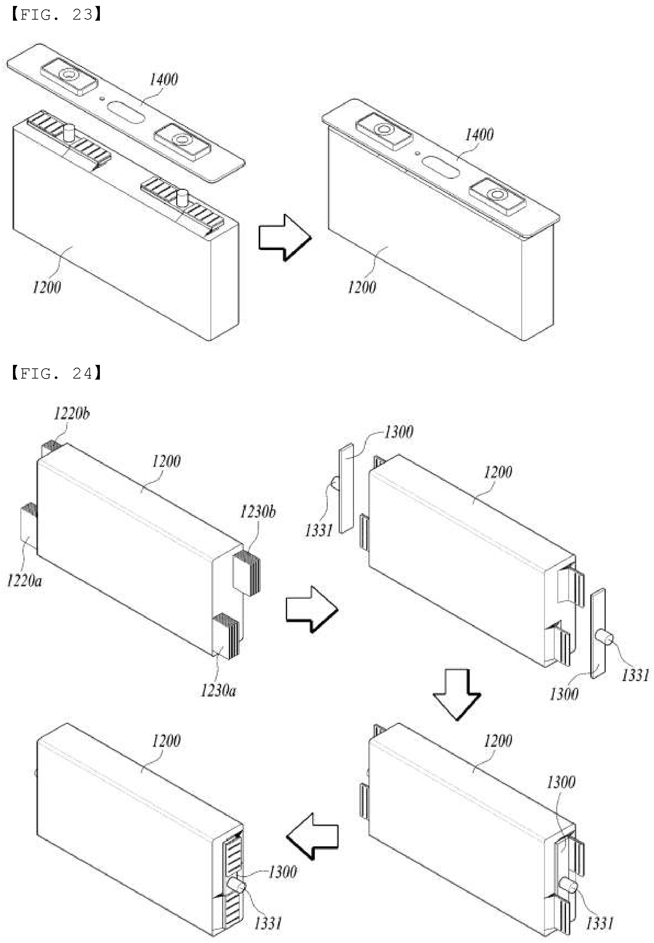

FIG. 22 is a conceptual view illustrating a structure in which two electrode tabs having the same polarity are joined to each current collector according to another embodiment of the present disclosure. FIG. 23 is a conceptual view illustrating a process of coupling the cap assembly to the current collectors in the secondary battery according to another embodiment of the present disclosure.

Referring to FIGS. 22 and 23, the electrode assembly 1200 of the secondary battery according to an embodiment of the present disclosure includes a plurality of first-1 electrode tabs 1220a, a plurality of first-2 electrode tabs 1220b, a plurality of second-1 electrode tabs 1230a, and a plurality of second-2 electrode tabs 1230b. The plurality of first-1 electrode tabs 1220a are aligned and overlapped with each other among the first-1 electrode tabs 1220a. The plurality of first-2 electrode tabs 1220b are aligned and overlapped with each other among the first-2 electrode tabs 1220b. The plurality of second-1 electrode tabs 1230a are aligned and overlapped with each other among the second-1 electrode tabs 1230a. The plurality of second-2 electrode tabs 1230b are aligned and overlapped with each other among the second-2 electrode tabs 1230b. The plurality of aligned electrode tabs 1220a to 1230b are disposed so as not to overlap in a width direction and the longitudinal direction of the electrode assembly 1200. The electrode tabs overlapping at each position among the electrode tabs 1220a to 1230b are welded to each other.

A current collector 1300 is positioned between the first-1 electrode tabs 1220a and the first-2 electrode tabs 1220b. A current collector insulator may be positioned between the current collector 1300 and the electrode assembly 1200. The first-1 electrode tabs 1220a are bent onto the current collector body 1310 on one side with respect to the current collecting protrusion 1320, and the first-2 electrode tabs 1220b are bent onto the current collector body 1310 on a remaining side with respect to the current collecting protrusion 1320. A current collector 1300 is also positioned between the second-1 electrode tabs 1230a and the second-2 electrode tabs 1230b. The second-1 electrode tabs 1230a are bent onto the current collector body 1310 on one side with respect to the current collecting protrusion 1320, and the second-2 electrode tabs 1230b are bent onto the current collector body 1310 on a remaining side with respect to the current collecting protrusion 1320.

After the plurality of electrode tabs 1220a to 1230b are bent onto the corresponding current collector bodies 1310, welding is performed on upper sides of the electrode tabs 1220a to 1230b to join the electrode tabs 1220a to 1230b and the current collector bodies 1310. A method such as ultrasonic welding or laser welding may be used for the welding.

After the electrode tabs 1220a to 1230b are joined to the corresponding current collectors 1300, the electrode assembly 1200 is accommodated in the casing 1100. The casing 1100 has the opening in one surface thereof, and the current collecting protrusions 1310 are exposed to the outside through the opening. The cap assembly 1400 is coupled to the casing 1100, and the current collecting protrusions 1310 of the current collector bodies 1300 are inserted into the hollows of the respective fixing elements.

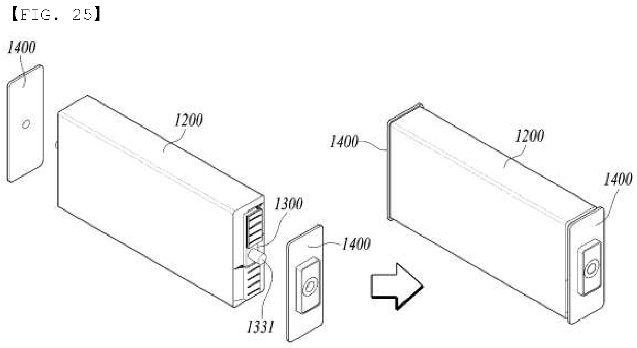

FIG. 24 is a conceptual view illustrating a structure of a secondary battery according to another embodiment of the present disclosure, in which electrode tabs having different polarities are formed in opposite directions of an electrode assembly, and two electrode tabs having the same polarity are joined to each current collector. FIG. 25 is a conceptual view illustrating a process of coupling cap assemblies to current collectors in a secondary battery according to another embodiment of the present disclosure.

Referring to FIGS. 24 and 25, the electrode assembly 1200 of the secondary battery according to an embodiment of the present disclosure includes a plurality of first-1 electrode tabs 1220a, a plurality of first-2 electrode tabs 1220b, a plurality of second-1 electrode tabs 1230a, and a plurality of second-2 electrode tabs 1230b. In the present disclosure, a detailed description of contents identical to those described with reference to FIGS. 22 and 23 will be omitted herein.

The first-1 electrode tabs 1220a and the first-2 electrode tabs 1220b are located on one side surface of the electrode assembly 1200, and the second-1 electrode tabs 1230a and the second-2 electrode tabs 1230b are located on another side surface of the electrode assembly 1200. The current collectors 1300 are respectively positioned between the first-1 electrode tabs 1220a and the first-2 electrode tabs 1220b and between the second-1 electrode tabs 1230a and the second-2 electrode tabs 1230b. After the plurality of electrode tabs 1220a to 1230b are bent onto the corresponding current collector bodies 1310, welding is performed on upper sides of the electrode tabs 1220a to 1230b to join the electrode tabs 1220a to 1230b and the current collector bodies 1310.

After the electrode tabs 1220a to 1230b are joined to the current collectors 1300, the electrode assembly 1200 is accommodated in the casing 1100. Openings are formed in one surface and another surface of the casing 1100, and the current collecting protrusions 1310 are exposed to the outside through the openings. Cap assemblies 1400 are coupled to the casing 1100. In each of the cap assemblies 1400, the corresponding current collecting protrusion 1310 of the current collector body 1300 is inserted into the hollow of the fixing element.

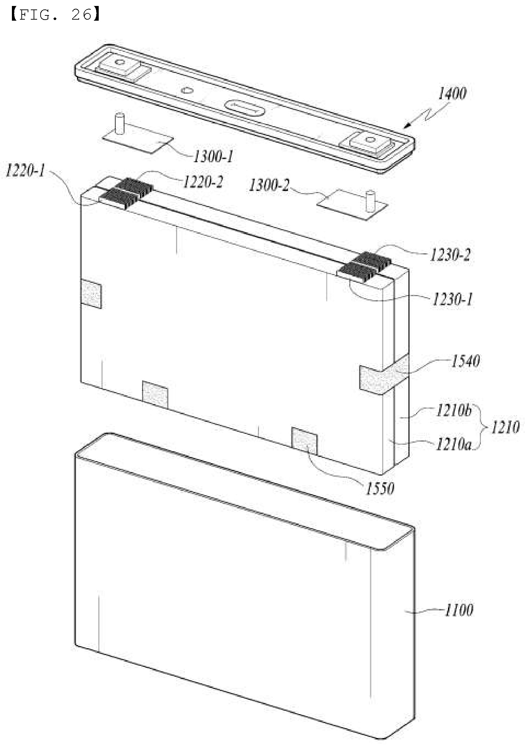

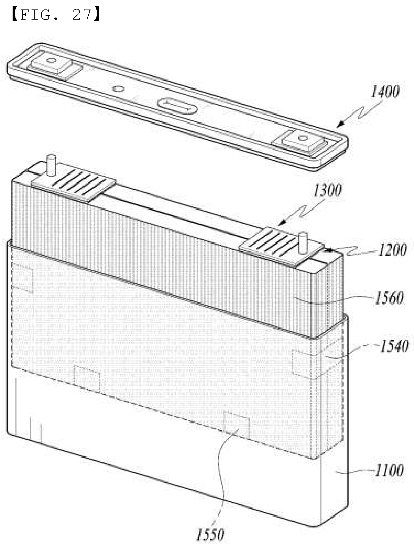

FIG. 26 is a view illustrating a secondary battery including two electrode portions according to another embodiment of the present disclosure. FIG. 27 is a view illustrating a structure in which electrode tabs formed on two electrode portions are joined to electrode elements in a secondary battery according to another embodiment of the present disclosure.

Referring to FIGS. 26 and 27, a secondary battery 1000 according to another embodiment of the present disclosure includes a casing 1100, an electrode assembly 1200, current collectors 1300, and a cap assembly 1400. In the present embodiment, a detailed description of contents identical to those described with reference to FIGS. 1 to 25 will be omitted herein.

An electrode portion 1210 of the electrode assembly 1200 includes a first electrode portion 1210a and a second electrode portion 1210b. First electrode tabs 1220-1 and second electrode tabs 1230-1 are formed on the first electrode portion 1210a. First electrode tabs 1220-2 and second electrode tabs 1230-2 are formed on the second electrode portion 1210b. The first electrode tabs 1220-1 of the first electrode portion 1210a and the first electrode tabs 1220-2 of the second electrode portion 1210b are joined to one identical current collector 1300a. The second electrode tabs 1230-1 of the first electrode portion 1210a and the second electrode tabs 1230-2 of the second electrode portion 1210b are joined to one identical current collector 1300b.

In the present embodiment, the first electrode portion 1210a and the second electrode portion 1210b are taped with a fourth insulating tape 1540 and a fifth insulating tape 1550 and are thus coupled to each other. The fourth insulating tape 1540 is attached to a height-direction side surface of the electrode assembly 1200, and the fifth insulating tape 1550 is attached to a longitudinal-direction side surface of the electrode assembly 1200.

When n pieces of the fourth or fifth insulating tape 1540 or 1550 are attached to one surface, the fourth and fifth insulating tapes 1540 and 1550 may be attached at positions dividing a length of a surface to which the tapes are attached into (n+1) parts. For example, as shown in FIG. 26, when one piece of the fourth insulating tape 1540 is attached to one height-direction side surface, the fourth insulating tape 1540 is attached at a position at which the height-direction side surface of the electrode assembly 1200 is divided into two parts. When two pieces of the fifth insulating tape 1550 are attached to one length-direction side surface, the fifth insulating tapes 1550 are attached at two positions at which the length-direction side surface of the electrode assembly 1200 is divided into three parts. In the present embodiment, one piece of the fourth insulating tape 1540 and two pieces of the fifth insulating tape 1550 are provided, but the disclosure is not limited thereto. The fourth insulating tape 1540 and the fifth insulating tape 1550 serve to bind the first electrode portion 1210a and the second electrode portion 1210b together and also provide insulating effect.

After the electrode assembly 1200 is taped with the fourth and fifth insulating tapes 1540 and 1550, a sixth insulating tape 1560 may be attached to the electrode assembly 1200 so as to wrap all surfaces thereof except the side surface on which the electrode tabs 1220-1, 1220-2, 1230-1, and 1230-2 are formed, thereby securing insulation from the casing 1100. Thereafter, the electrode assembly 1200 is inserted into the casing 1100, and the cap assembly 1400 is joined to the opening of the casing 1100.

While the embodiments of the present disclosure have been described, it will be apparent to those skilled in the art that various changes or modifications of the present disclosure are possible by adding, changing, or deleting components without departing from the spirit of the present disclosure as defined in the following claims. It should be noted that these changes or modifications also fall within the scope of the present disclosure.

## Claims

1. A secondary battery, comprising:
a casing formed with an opening;
an electrode assembly accommodated in the casing, and comprising an electrode portion and a plurality of electrode tabs formed on the electrode portion;
a current collector comprising a current collector body electrically connected to the plurality of electrode tabs, and a current collecting protrusion protruding from the current collector body; and
a cap assembly coupled to the opening of the casing,
wherein the cap assembly comprises
a cap plate formed with an electrolyte injection hole for injection of an electrolyte, and a through hole;
an electrode terminal formed with a terminal hole, and coupled to the cap plate such that the through hole overlaps the terminal hole,
a terminal insulator positioned between the electrode terminal and the cap plate,
a base insulator positioned between the cap plate and the electrode assembly, and having a guide hole formed at a position corresponding to the electrolyte injection hole, and
a fixing element comprising a body portion having a hollow structure allowing the current collecting protrusion to be inserted thereinto, the body portion being inserted into the through hole and the terminal hole, a first fixing portion extending from a first end of the body portion outward in a lateral direction, and a second fixing portion extending from a second end of the body portion outward in the lateral direction, and
wherein the current collecting protrusion and the first fixing portion of the fixing element are joined to each other.

2. The secondary battery of claim 1, wherein the cap assembly further comprises a gasket positioned between the cap plate and the fixing element.

3. The secondary battery of claim 1 or 2, wherein the first fixing portion and the second fixing portion of the fixing element are pressed in a direction toward the cap plate.

4. The secondary battery of claim 1 or 2, wherein the first fixing portion and the electrode terminal are welded to each other.

5. The secondary battery of claim 1 or 2, wherein the electrode terminal has a seating recess formed around the terminal hole so that the first fixing portion of the fixing element is positioned in the seating recess.

6. The secondary battery of claim 5, wherein the first fixing portion of the fixing element is seated to have a height lower than an upper end of the electrode terminal in a height direction.

7. The secondary battery of claim 6, wherein the current collecting protrusion is inserted into the body portion such that an upper end thereof in the height direction has a height equal to or lower than a height of the first fixing portion of the fixing element.

8. The secondary battery of claim 1 or 2, wherein a first fixing recess is formed around the current collecting protrusion in an upper surface of the current collector body in a height direction, the first fixing recess receiving and seating the second fixing portion therein.

9. The secondary battery of claim 1 or 2, wherein the current collector body is formed with a second protrusion, and the second fixing portion is formed with a second fixing recess into which the second protrusion is inserted.

10. The secondary battery of claim 1 or 2, wherein a first insulating tape is attached to the current collector body electrically connected to the electrode assembly.

11. The secondary battery of claim 1 or 2, wherein a second insulating tape is attached to an outer surface of the electrode assembly on which the electrode tabs are not formed.

12. The secondary battery of claim 1 or 2, wherein a third insulating tape is attached to an outer surface of the casing that accommodates the electrode assembly and to which the cap assembly is coupled.

13. The secondary battery of claim 1 or 2, wherein the base insulator further includes a guide portion protruding from the guide hole in a direction toward the electrode assembly.

14. The secondary battery of claim 1 or 2, wherein the electrolyte injection hole is formed with an injection protrusion at a lower end thereof, and the injection protrusion is inserted into the guide hole.

15. The secondary battery of claim 1 or 2,
wherein a first opening and a second opening are formed in the casing,
wherein the electrode assembly includes a plurality of first electrode tabs formed in a first direction, and a plurality of second electrode tabs formed in a second direction, and is accommodated in the casing such that the first electrode tabs face the first opening, and the second electrode tabs face the second opening,
wherein the current collector comprises a first current collector connected to the first electrode tabs, and a second current collector connected to the second electrode tabs, and
wherein the cap assembly comprises a first cap assembly coupled to the first opening, and a second cap assembly coupled to the second opening.

16. The secondary battery of claim 15,
wherein an electrode terminal of the first cap assembly is made of a material identical to a material of the fixing element, and
wherein an electrode terminal of the second cap assembly is made of a material different from the material of the fixing element.

17. The secondary battery of claim 1 or 2,
wherein the plurality of electrode tabs comprise a plurality of first electrode tabs and a plurality of second electrode tabs,
wherein the plurality of first electrode tabs comprise a plurality of electrode tabs spaced apart from each other, bent onto the current collector body on opposite sides of the current collecting protrusion of the current collector, and welded to the current collector body, and
wherein the plurality of second electrode tabs comprise a plurality of electrode tabs spaced apart from each other, bent onto a corresponding current collector body on opposite sides of a current collecting protrusion of a current collector different from the current collector connected to the first electrode tabs, and welded to the current collector body.

18. The secondary battery of claim 17, wherein the plurality of first electrode tabs and the plurality of second electrode tabs are formed on the electrode assembly in different directions.

19. The secondary battery of claim 1 or 2,
wherein the electrode assembly comprises a first electrode portion and a second electrode portion,
wherein the first electrode portion comprises a first electrode tab and a second electrode tab, and the second electrode portion comprises a first electrode tab and a second electrode tab,
wherein the first electrode tab of the first electrode portion and the first electrode tab of the second electrode portion are joined to an identical current collector, and
wherein the second electrode tab of the first electrode portion and the second electrode tab of the second electrode portion are joined to an identical current collector.
